# FASCICULE DE BREVET EUROPEEN

(11) **EP 0 856 624 B1**
(45) Date de publication et mention de la délivrance du brevet: **10.09.2003**
(21) Numéro de dépôt: 98101161.2
(22) Date de dépôt: 23.01.1998
(51) Int. Cl.: E05B 49/00, B60R 25/04

(54) **Système de sécurité pour véhicules automobiles et procédé d'apprentissage associé**
Sicherheitsvorrichtung für Kraftfahrzeuge und Lernverfahren dafür
Safety device for motor vehicle and learning method therefor

(30) Priorité: 31.01.1997 FR 9701194
(43) Date de publication de la demande: 05.08.1998
(73) Titulaire: Valeo Securité Habitacle, 94042 Créteil (FR)
(72) Inventeur: Persiani, Vincent, 69005 Lyon (FR)
(74) Mandataire: Lenne, Laurence

(56) Documents cités:
- WO-A-90/08242
- WO-A-94/23163
- FR-A- 2 731 190

## Description

La présente invention concerne un perfectionnement aux systèmes de sécurité pour véhicules automobiles, et un procédé de mise en mode apprentissage d'un tel système.

Elle s'applique notamment à des systèmes comportant au moins un boîtier portable comportant des moyens d'émission d'un signal codé de déverrouillage des portières et/ou des moyens de transmission d'un signal de déverrouillage d'un dispositif d'immobilisation du véhicule (communément appelé dispositif d'antivol ou d'antidémarrage codé).

Un tel boîtier est par exemple associé à une clé mécanique portée par l'utilisateur autorisé du véhicule, dont la partie de préhension contient lesdits moyens d'émission. Le signal codé de déverrouillage des portières, dit signal de télécommande, est en général un signal radiofréquence ou infrarouge codé. Il comporte un code de télécommande. Ainsi la clé remplit une fonction de télécommande pour le déverrouillage à distance des portières.

En outre, le moyen de transmission de la clé comprend généralement un transpondeur qui est interrogé par des moyens adaptés lorsque la clé est insérée dans le canon de la serrure d'antivol de direction. Cette interrogation provoque l'émission par le transpondeur d'un signal de réponse radiofréquence, dit signal d'immobiliseur, comportant un code d'immobiliseur. Ainsi la clé remplit également une fonction de déverrouillage de l'antivol codé du véhicule.

Une unité de gestion embarquée comporte des moyens de réception et de décodage des signaux de télécommande et d'immobiliseur pour, respectivement, provoquer le déverrouillage des portières à réception d'un code de télécommande valide, et/ou provoquer le déverrouilage du dispositif d'immobilisation du véhicule à réception d'un code d'immobiliseur valide, en sorte que l'utilisateur peut accéder à son véhicule et le démarrer.

Un problème particulier se pose lorsque la clé est perdue ou volée.

D'une part, il est nécessaire, dans un premier temps, de disposer de moyens subsidiaires pour permettre à l'utilisateur d'ouvrir et de démarrer son véhicule, et, dans un deuxième temps, de lui procurer une nouvelle clé dont le code de télécommande et le code d'immobiliseur seront reconnus comme valides par l'unité de gestion.

D'autre part, il est nécessaire d'effacer de la mémoire de l'unité de gestion les codes de la clé perdue ou volée afin d'empêcher son utilisation frauduleuse par un tiers mal intentionné qui serait entré en sa possession.

Dans le document EP-A-0 704 352, on a déjà proposé un système comprenant une unité de gestion embarquée ainsi qu'au moins une clé normale dont les codes de télécommande et d'immobiliseur sont programmés dans une mémoire non volatile et ré-inscriptible d'une unité de gestion embarquée.

Le système comprend également une clé maîtresse (communément dénommée « master-key » en anglais) qui, d'une part, permet le déverrouillage des portières et du dispositif d'immobilisation du véhicule, et, d'autre part, permet de placer l'unité de gestion en mode apprentissage afin de permettre la programmation des codes d'une nouvelle clé normale.

L'utilisateur conserve la clé maîtresse sur lui en permanence. En cas de perte ou de vol de la clé normale, il peut utiliser la clé maîtresse pour démarrer son véhicule. Dès que la clé maîtresse est insérée dans le canon de la serrure d'antivol de direction du véhicule, l'unité de gestion embarquée se place en mode apprentissage pendant une fenêtre temporelle déterminée. Si au moins une nouvelle clé normale, comportant de nouveaux codes de télécommande et d'immobilisation, est insérée dans le canon de la serrure à la suite de la clé maîtresse pendant ladite fenêtre temporelle, les valeurs des codes de la nouvelle clé normale sont sauvegardées à la place des valeurs des codes de la clé perdue ou volée, celles-ci étant ainsi détruites.

Le signal émis par la clé maîtresse comporte lui-même un code d'identification permettant à l'unité de gestion de ne se placer en mode apprentissage qu'en présence d'une clé maîtresse autorisée.

Un tel système est cependant encore imparfait dans la mesure où, en cas de perte ou de vol de la clé maîtresse, un tiers mal intentionné qui serait en sa possession pourrait ouvrir et démarrer le véhicule, et pourrait même reprogrammer l'unité de gestion pour qu'elle admette une clé normale pirate.

Afin de pallier cet inconvénient de l'état de la technique, la présente invention propose un système de sécurité pour véhicules automobiles, comprenant au moins une clé dotée de moyens d'émission d'un signal codé de télécommande contenant un code de télécommande pour l'ouverture à distance des portières, dit signal codé de télécommande, et dotée également de moyens de transmission d'un signal codé de déverrouillage d'un dispositif d'immobilisation du véhicule contenant un code d'immobiliseur, dit signal codé d'immobiliseur, le système comprenant de plus une unité de gestion embarquée qui comporte une mémoire non volatile dans laquelle lesdits codes de télécommande et d'immobiliseur sont sauvegardés.

Selon l'invention, le système comprend en outre :
- un moyen de sauvegarde formant support de données et comportant une mémoire non volatile dont la lecture est verrouillée par un code personnel connu de l'utilisateur seulement, ladite mémoire contenant le code de télécommande et le code d'immobiliseur du véhicule ;
- un appareil spécifique comportant :
   - des moyens de saisie du code personnel par l'utilisateur autorisé ;
   - des moyens de lecture du code de télécommande et du code d'immobiliseur dans la mémoire dudit moyen de sauvegarde, ne fonctionnant qu'en cas d'identité entre le code confidentiel verrouillant la lecture de ladite mémoire et le code personnel saisi par l'utilisateur ;
   - ainsi que des moyens d'émission du signal codé de télécommande.

Selon d'autres caractéristiques de l'invention, prises indépendamment ou selon toutes leurs combinaisons techniquement possibles :
- le moyen de sauvegarde est une carte à puce, le code personnel connu de l'utilisateur étant sauvegardé dans la puce ;
- la mémoire de la puce contient en outre au moins certaines des informations suivantes : la référence du codage mécanique des clés, le numéro de série du véhicule, le numéro d'immatriculation du véhicule, la date de sa première mise en circulation, le nom et l'adresse de son propriétaire ;
- les moyens de lecture de la mémoire du moyen de sauvegarde comprennent un lecteur de cartes à puce ;
- les moyens de saisie du code personnel par l'utilisateur autorisé comprennent un clavier à touches ;
- l'appareil spécifique comprend des moyens de connexion à l'unité de gestion embarquée de manière à réaliser une liaison filaire pour l'échange de données. Cette liaison filaire présente l'avantage de rendre inviolable la transmission de données en mode apprentissage, au contraire d'une transmission par émission d'ondes dans l'espace libre, en particulier d'ondes radiofréquences, qui est susceptible d'être captée par des appareils pirates ;
- les moyens de transmission du signal d'immobiliseur de la clé comprennent un transpondeur qui est interrogé lorsque la clé est placée en position déterminée dans la serrure d'antivol de direction, et qui émet en réponse ledit signal codé d'immobiliseur ;

L'invention concerne également un procédé pour la mise en mode apprentissage d'un système tel que défini ci-dessus.

Selon des caractéristiques dudit procédé :
- un signal de mise en mode apprentissage est transmis à l'unité de gestion embarquée par l'appareil spécifique lorsqu'un code personnel valable et lorsqu'une commande déterminée est sélectionnée via les moyens de saisie de l'appareil spécifique ; à réception dudit signal de mise en mode apprentissage, l'unité de gestion est placée en mode apprentissage ;
- le signal de mise en mode apprentissage est transmis sur une liaison filaire entre l'appareil spécifique et l'unité de gestion embarquée à bord du véhicule, ceux ci comportant des moyens de connexion réciproque.

D'autres caractéristiques et avantages de la présente invention apparaîtront encore à la lecture de la description qui va suivre. Cette description est purement illustrative et doit être lue en regard des dessins annexés sur lesquels on a représenté :
- à la figure 1 : un schéma du principe normal de fonctionnement du système de sécurité selon l'invention ;
- à la figure 2 : un schéma du principe de fonctionnement du système de sécurité selon l'invention en cas de perte ou de vol de la clé ;
- à la figure 3 : une reproduction d'un ecran d'acceuil de l'appareil spécifique ;
- à la figure 4 : une reproduction d'un écran de l'appareil spécifique en fonctionnement.

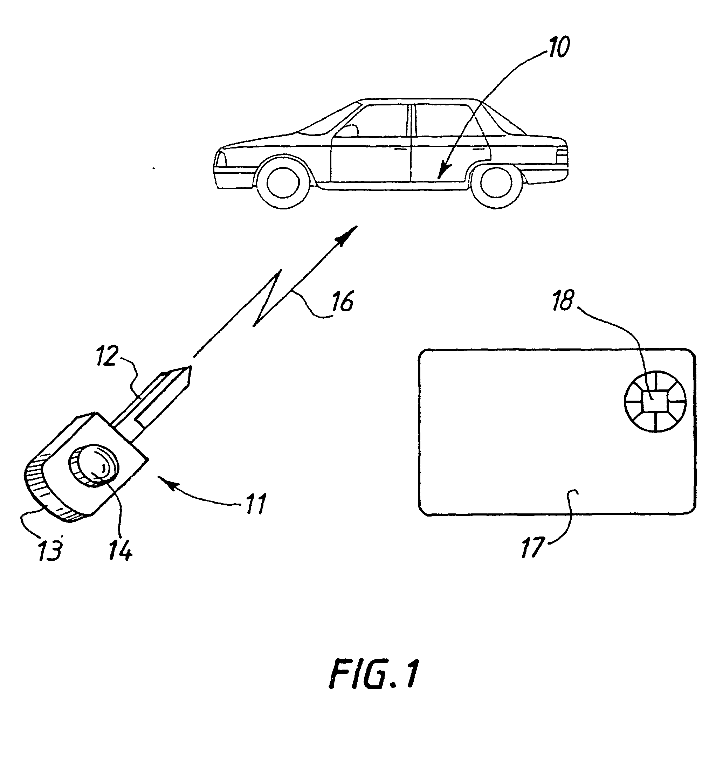

A la figure 1, on a représenté une clé 11 comportant un insert 12 qui porte des dentures non représentées formant un codage mécanique, adaptées pour coopérer avec les paillettes d'une serrure comme la serrure de portière et/ou la serrure d'antivol de colonne de direction du véhicule 10 auquel elle est associée.

La clé 11 est également dotée de moyens (non représentés) d'émission d'un signal codé de télécommande, comprenant par exemple une antenne radiofréquence si ledit signal est porté par une onde radiofréquence ou une diode infrarouge s'il est porté par une onde infrarouge. Ces moyens sont logés dans la tête 13 de la clé 11 formant partie de préhension. Une touche à enfoncement 14 disposée sur la tête de la clé déclenche l'émission du signal de télécommande 16 par lesdits moyens.

Le signal de télécommande 16 contient un code de télécommande. Une unité de gestion (non représentée) embarquée à bord du véhicule 10 comporte des moyens adaptés de réception du signal de télécommande 16 et des moyens de décodage du code de télécommande reçu. Ce code est comparé à un code enregistré dans ladite unité de gestion et, en cas d'égalité entre ces codes, c'est à dire lorsque le code reçu est reconnu comme valide, l'unité de gestion commande l'ouverture des portières du véhicule 10.

La clé 11 est également dotée de moyens de transmission d'un signal codé de déverrouillage d'un dispositif d'immobilisation du véhicule contenant un code d'immobiliseur. Ainsi qu'il est connu, un tel dispositif peut fonctionner par inhibition du calculateur d'injection du véhicule.

Ces moyens comprennent par exemple un transpondeur (non représenté) également logé dans la tête de clé 13.

L'unité de gestion est connectée à des moyens d'interrogation du transpondeur, comprenant par exemple une bobine inductive disposée autour du cylindre de la serrure d'antivol de direction. Ces moyens d'interrogation sont activés lorsque l'insert de clé 12 est inséré dans la serrure d'antivol de direction.

L'unité de gestion embarquée comporte une mémoire non volatile et ré-inscriptible dans laquelle le code de télécommande et le code d'immobiliseur de la clé sont sauvegardés. Il est bien évident que les codes de plusieurs clés valides peuvent être enregistrés afin de permettre l'utilisation du véhicule par plusieurs utilisateurs différents, chacun détenant une telle clé pour son utilisation propre.

De façon classique, il est remis au nouveau propriétaire un jeu de clés valides lors de l'achat du véhicule. Selon l'invention, il lui est en outre remis une carte à puce 17 ayant par exemple le format d'une carte de crédit. Cette carte à puce constitue selon l'invention un moyen de sauvegarde formant support de données et comportant une mémoire non volatile dont la lecture est verrouilée par par un code personnel connu de l'utilisateur seulement. Cette mémoire contient en outre le code de télécommande et le code d'immobiliseur associés à l'unité de gestion 10 embarquée dans le véhicule. Ladite mémoire est comprise dans la puce 18 de la carte 17.

Eventuellement cette mémoire contient au moins certaines des informations suivantes : la référence du codage mécanique des clés, le numéro de série du véhicule, le numéro d'immatriculation du véhicule, la date de sa première mise en circulation, le nom et l'adresse de son propriétaire ... On peut également prévoir qu'elle contiendra l'historique des réparations et autres interventions techniques effectuées sur le véhicules. Ainsi, la carte à puce représente un véritable moyen d'identification du véhicule et de mémorisation des informations administratives et techniques y relatives. Ces informations étant verrouillées en lecture par le code personnel connu de l'utilisateur seulement, celui-ci est le seul à pouvoir les exploiter le moment venu.

Un réseau informatique centralisé, par exemple géré par le constructeur du véhicule ou par une organisation mandatée par lui, comporte un ensemble de terminaux répartis dans les succursales du constructeur ou chez des garagistes agréés et permet de gérer une base de données contenant les codes personnels de chaque propriétaire d'une flotte de véhicules, ainsi que les codes de télécommandes et de déverrouillage de chaque véhicule.

La confidentialité du code personnel est organisée de la même manière que pour le code confidentiel des cartes bancaires de retrait et/ou de paiement.

Lors du premier achat du véhicule chez un concessionnaire de la marque, le code confidentiel peut par exemple être communiqué sous pli scellé au premier propriétaire du véhicule.

En variante, l'utilisateur compose un code de son choix à l'abri des regards indiscrets sur un appareil spécifique relié à l'un des terminaux précités. Le code personnel ainsi choisi est alors enregistré sur la puce de la carte qui contient à cet effet une mémoire non ré-inscriptible de type EPROM (de l'anglais « Electrically-Programmable-Read-Only-Memory »), et est transmis sous forme cryptée via le réseau informatique à un ordinateur central semblable à celui qui gère actuellement les codes confidentiels des cartes bancaires.

En cas de revente du véhicule par son propriétaire initial, le code peut-être modifié à l'aide de l'appareil spécifique ainsi qu'il sera exposé ci-dessous. En variante, on peut prévoir la fabrication et la fourniture au nouveau propriétaire d'une nouvelle carte à puce associée à un nouveau code personnel choisi arbitrairement du point de vue de l'utilisateur final.

La carte à puce 17 doit être conservée sur lui par l'utilisateur principal du véhicule. A défaut, elle peut être conservée en lieu sûr, par exemple à son domicile. De plus le code personnel doit être mémorisé et ne doit pas être oublié par l'utilisateur (ou les) utilisateur(s) autorisé(s).

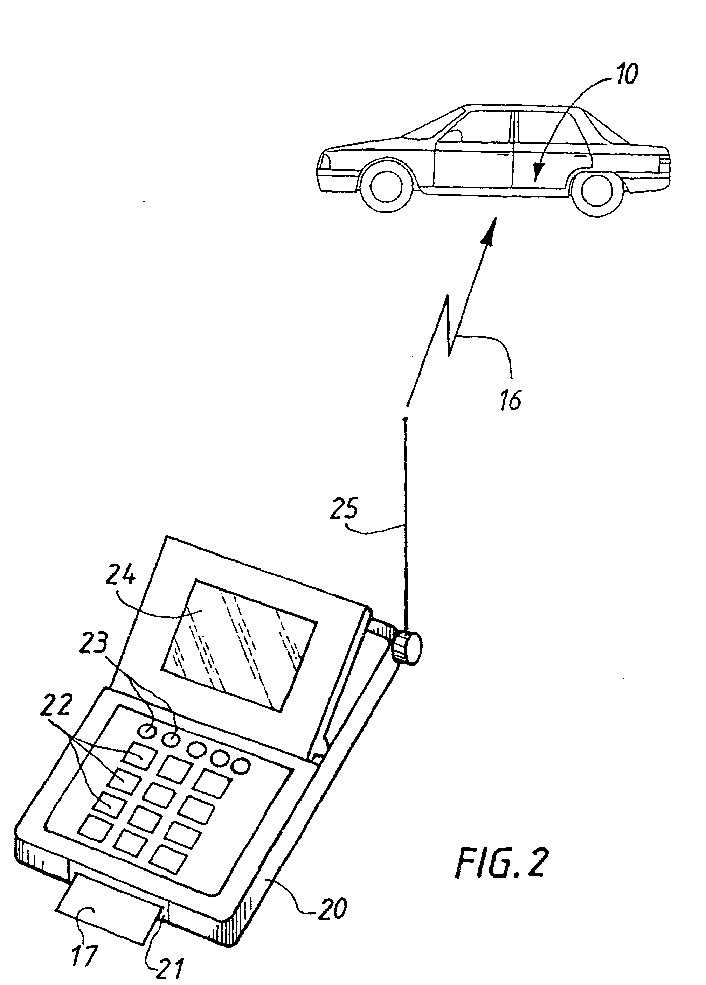

En effet, en cas de perte ou de vol d'une ou de l'ensemble des clés du véhicule, la carte à puce et la connaissance du code personnel qui lui est associé peuvent seuls permettre d'ouvrir et de démarrer le véhicule selon un mode dépannage qui va maintenant être décrit en regard de la figure 2.

Sur cette figure, on a représenté le véhicule 10 et un appareil spécifique 20 qui peut uniquement être détenu par des garagistes professionnels agréés du réseau de la marque du véhicule ou par toute autre personne agréée.

Cet appareil spécifique comporte une ouverture 21 pour l'insertion de la carte à puce 17, et se présente sous la forme générale des appareils de traitement de cartes à puce utilisés par les commerçants pour enregistrer les paiements par carte bancaire.

Il comporte également des moyens de saisie de son code personnel par l'utilisateur, ces moyens comprenant un clavier à touches 22 et un ensemble de touches de commande 23, telle qu'une touche de validation et une touche d'annulation de la saisie.

Il comporte en outre des moyens de lecture de la mémoire du moyen de sauvegarde que constitue la carte 17, tels qu'un lecteur de cartes à puce, afin d'y lire le code de télécommande et le code d'immobiliseur associés au véhicule lorsque le code personnel saisi par l'utilisateur correspond au code confidentiel inscrit dans la mémoire de la carte à puce. La lecture de cette mémoire est en effet verrouillée par ledit code confidentiel, en sorte qu'il est impossible d'y lire les codes de télécommande et d'immobiliseur sans préalablement saisir un code personnel qui sera reconnu valide par le microprocesseur de la carte à puce comme étant identique au code confidentiel précité.

L'appareil spécifique comporte en outre des moyens d'émission du signal codé de télécommande, qui sont activés en cas d'identité entre le code confidentiel de la carte à puce et le code personnel saisi par l'utilisateur sur le clavier à touches 22. Ce signal comporte alors le code de télécommande lu sur la puce 18 de la carte 17.

Les moyens d'émission comprennent notamment une antenne 25 dans le cas où ces signaux sont portés par une onde radiofréquence, mais peuvent également comporter une diode d'émission infrarouge dans le cas où ces signaux sont portés par une onde de ce type.

Enfin, l'appareil spécifique peut comporter un écran 24 de contrôle des informations saisies, sur lequel le code personnel saisi par l'utilisateur n'apparaît pas afin de renforcer la confidentialité du système.

Ainsi qu'on l'aura compris, en cas de perte ou de vol de sa clé, l'utilisateur se rend chez le garagiste agréé le plus proche qui, muni de l'appareil spécifique, l'accompagne alors auprès du véhicule.

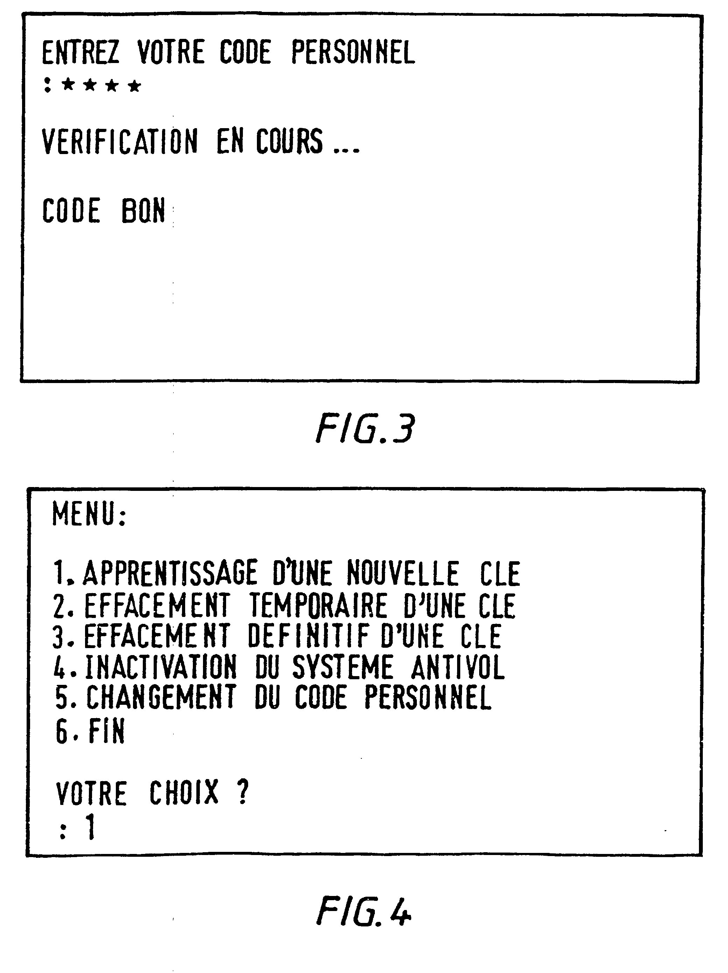

A la la mise sous tension de l'appareil spécifique, un écran d'acceuil, par exemple tel que représenté sur la figure 3, s'affiche sur l'écran 24. Un message invite l'utilisateur à saisir son code personnel.

Selon un fonctionnement dit fonctionnement en mode dépannage, l'utilisateur insère alors sa carte à puce 17 dans l'appareil spécifique 20 et saisit son code personnel sur le clavier à touches 22.

De façon connue en soi, la saisie du code personnel ne fait pas apparaître à l'écran les chiffres (et/ou les lettres) composant ledit code de manière à renforcer la confidentialité.

En cas de saisie d'un code personnel valable, l'appareil spécifique émet le signal codé de télécommande si une première touche de commande est activée.

Après réception du signal par l'unité de gestion embarquée, le code de télécommande émis est comparé au code correspondant contenu dans la mémoire de ladite unité de gestion de la même manière que lors du fonctionnement normal. En cas d'égalité, les portières du véhicule sont déverrouillées.

Nous allons maintenant décrire le fonctionnement en mode intervention du système de sécurité de l'invention. Il s'agit d'un mode de fonctionnement permettant de réaliser tout ou partie des actions qui seront décrites ci-dessous.

Les portières du véhicule étant déverrouillées et par conséquent son accès étant libre, l'appareil spécifique est relié à l'unité de gestion embarquée par une liaison filaire, par exemple une liaison par câble électrique.

L'appareil spécifique comporte à cet effet des moyens de connexion tels qu'un connecteur, coopérant avec des moyens complémentaires de l'unité de gestion via ladite liaison filaire. Ces derniers moyens comprennent par exemple un connecteur disposé dans une zone dérobée mais acessible de l'habitacle du véhicule, par exemple à l'intérieur de la boîte à gants.

L'utilisateur insère alors sa carte à puce 17 dans l'appareil spécifique 20 et saisit son code personnel sur le clavier à touches 22 de la même manière que pour le fonctionnement en mode dépannage décrit ci-dessus en regard de la figure 3.

En cas de saisie d'un code personnel valable, un écran tel que celui représenté à la figure 4 apparaît alors sur l'écran 24 de l'appareil spécifique si une deuxième touche de commande est activée.

L'écran de la figure 4 est un écran dit écran de menu car il propose à l'utilisateur de faire un choix parmi plusieurs actions.

Une première action possible est l'apprentissage d'une nouvelle clé. Il s'agit d'un procédé visant à associer une ou plusieurs nouvelles clés à l'unité de gestion embarquée de manière à ce qu'elles deviennent admises par ladite unité comme clé valable. Cette association pourra résulter, selon la technologie de conception du système de sécurité, soit de la programmation des différents codes de l'unité de gestion dans une clé vierge, soit à l'inverse de la programmation des codes d'une nouvelle clé dans la mémoire de l'unité de gestion comme dans le document EP-A-0 704 352. Notons qu'une telle opération d'association est réalisée une première fois en usine lors du montage du véhicule.

Une deuxième et une troisième actions pourront consister à effacer les codes d'identification d'une clé pour empêcher son utilisation de manière, respectivement, temporaire si la clé est simplement égarée avec espoir de la retrouver, ou définitive si la clé est a été volée.

Une quatrième action pourra consister à inhiber purement et simplement le système de sécurité soit pendant une durée déterminée soit pour un nombre d'utilisation déterminé, de manière par exemple à permettre à l'utilisateur d'utiliser son véhicule si l'apprentissage d'une nouvelle clé n'est pas possible sur le champ du fait d'un défaut d'approvisionnement en nouvelles clés ou clés vierges.

Enfin une dernière action pourra permettre le changement du code personnel de l'utilisateur, par exemple en cas de vente du véhicule ainsi qu'il a été évoqué plus haut, ou lorsque un doute quelconque existe sur le caratère confidentiel de ce code.

D'autres actions, non évoquées ici, sont néanmoins immaginables.

En cas de perte simultanée de la clé et également de la carte à puce, on peut prévoir qu'une carte à puce contenant toutes les données relatives au véhicule et soit un nouveau code personnel soit le même code personnel qu'auparavant soit refabriquée après bien sûr une vérification minutieuse de l'identité de l'utilisateur sollicitant cette refabrication.

Ainsi qu'on a pu s'en rendre compte, l'invention permet de résoudre les problèmes engendrés la perte des clés de véhicules sans réduire le niveau de sécurité du système.

Notamment, un tiers mal intentionné, même disposant de l'appareil spécifique, par exemple après l'avoir dérobé à un garagiste agréé, ne pourrait provoquer l'ouverture des portières du véhicule ni placer l'unité de gestion d'un véhicule en mode apprentissage afin de programmer une nouvelle clé qui en l'occurrence serait une clé pirate.

Ainsi, seul l'utilisateur autorisé, c'est à dire celui qui à la fois est en possession de la carte à puce et peut valablement saisir le code personnel qui lui est associé, est en mesure d'une part de provoquer le déverrouillage du véhicule et d'autre part de placer l'unité de gestion embarquée en mode apprentissage.

De plus, cette opération est réalisée avec le concours nécessaire d'un garagiste agréé qui dispose seul de l'appareil spécifique 20 de la figure 2. Ce professionnel peut donc inviter l'utilisateur sollicitant son intervention à justifier, de toute manière appropriée, sa qualité de propriétaire légitime du véhicule.

Pour toutes ces raisons, la sécurité du système est donc notablement renforcée par rapport aux systèmes de l'art antérieur.

La présente invention a été décrite selon un mode de réalisation préféré mais non limitatif. En particulier, il est possible que le signal de télécommande et le signal d'immobiliseur soient un seul et même signal contenant à la fois le code de télécommande et le code d'immobiliseur associés au véhicule.

## Revendications

1. Système de sécurité pour véhicules automobiles, comprenant au moins une clé (11) dotée de moyens d'émission d'un signal (16) codé de télécommande contenant un code de télécommande pour l'ouverture à distance des portières, dit signal codé de télécommande, et dotée également de moyens de transmission d'un signal codé de déverrouillage d'un dispositif d'immobilisation du véhicule contenant un code d'immobiliseur, dit signal codé d'immobiliseur, le système comprenant de plus une unité de gestion embarquée qui comporte une mémoire non volatile dans laquelle lesdits codes de télécommande et d'immobiliseur sont sauvegardés, **caractérisé en ce que** le système comprend en outre :
- un moyen de sauvegarde (17) formant support de données et comportant une mémoire non volatile dont la lecture est verrouillée par un code personnel connu de l'utilisateur seulement, ladite mémoire contenant le code de télécommande et le code d'immobiliseur du véhicule ;
- un appareil spécifique (20) comportant :
- des moyens (22) de saisie du code personnel par l'utilisateur autorisé ;
- des moyens de lecture du code de télécommande et du code d'immobiliseur dans la mémoire dudit moyen de sauvegarde, ne fonctionnant qu'en cas d'identité entre le code confidentiel verrouillant la lecture de ladite mémoire et le code personnel saisi par l'utilisateur ;
- ainsi que des moyens (25) d'émission du signal codé de télécommande.

2. Système selon la revendication 1 **caractérisé en ce que** le moyen de sauvegarde (17) est une carte à puce, le code personnel connu de l'utilisateur étant sauvegardé dans la puce (18).

3. Système selon la revendication 2 **caractérisé en ce que** la mémoire de la puce (18) contient en outre au moins certaines des informations suivantes : la référence du codage mécanique des clés, le numéro de série du véhicule, le numéro d'immatriculation du véhicule, la date de sa première mise en circulation, le nom et l'adresse de son propriétaire.

4. Système selon la revendication 1 **caractérisé en ce que** les moyens de lecture de la mémoire du moyen de sauvegarde (17) comprennent un lecteur de cartes à puce.

5. Système selon la revendication 1 **caractérisé en ce que** les moyens (22) de saisie du code personnel par l'utilisateur autorisé comprennent un clavier à touches.

6. Système selon l'une quelconque des revendications précédentes **caractérisé en ce que** l'appareil spécifique (20) comprend des moyens de connexion à l'unité de gestion embarquée de manière à réaliser une liaison filaire pour l'échange de données.

7. Système selon la revendication 1 **caractérisé en ce que** les moyens de transmission du signal d'immobiliseur de la clé comprennent un transpondeur.

8. Procédé pour la mise en mode apprentissage d'un système selon l'une quelconque des revendications précédentes, **caractérisé en ce qu'**un signal de mise en mode apprentissage est transmis à l'unité de gestion embarquée par l'appareil spécifique lorsqu'un code personnel valable et lorsqu'une commande déterminée est sélectionnée via les moyens de saisie de l'appareil spécifique, l'unité de gestion étant placée en mode apprentissage à réception dudit signal.

9. Procédé selon la revendication 8 **caractérisé en ce que** le signal de mise en mode apprentissage est transmis sur une liaison filaire entre l'appareil spécifique et l'unité de gestion embarquée à bord du véhicule.

## Patentansprüche

1. Sicherheitssystem für Kraftfahrzeuge, enthaltend zumindest einen Schlüssel (11), der mit Mitteln zum Ausgeben eines sogenannten codierten Fernbediensignals (16) ausgestattet ist, das einen Fernbediencode zum Öffnen der Türen über eine Entfernung enthält, und der auch mit Mitteln zum Übertragen eines sogenannten codierten Blockiersignals zum Entriegeln einer Blockiervorrichtung des Fahrzeugs ausgestattet ist, welches Signal einen Blockiercode enthält, wobei das System ferner eine im Fahrzeug mitgeführte Leiteinheit enthält, die einen nicht flüchtigen Speicher aufweist, in dem die genannten Fernbedien- und Blockiercodes eingespeichert sind, **dadurch gekennzeichnet, dass** das System ferner enthält:
- ein Speichermittel (17), das einen Datenträger bildet und einen nicht flüchtigen Speicher enthält, dessen Lesen über einen persönlichen Code gesperrt ist, den nur der Benutzer kennt, wobei der genannte Speicher den Fembedien- und den Blockiercode des Fahrzeugs enthält,
- ein Spezialgerät (20) mit
- Mitteln (22) zum Erfassen des persönlichen Codes durch den autorisierten Benutzer,
- Mitteln zum Einlesen des Fernbediencodes und des Blockiercodes in den Speicher des genannten Speichermittels, die nur im Falle von Identität zwischen dem das Lesen des genannten Speichers sperrenden vertraulichen Code und dem durch den Benutzer erfassten persönlichen Code funktionieren,
- sowie Mitten (25) zum Ausgeben des codierten Fernbediensignals.

2. System nach Anspruch 1, **dadurch gekennzeichnet, dass** das Speichermittel (17) eine Chip-Karte ist, wobei der dem Benutzer bekannte persönliche Code im Chip (18) eingespeichert ist.

3. System nach Anspruch 2, **dadurch gekennzeichnet, dass** der Speicher des Chips (18) ferner zumindest bestimmte der nachfolgenden Informationen enthält: Hinweis auf die mechanische Codierung der Schlüssel, Seriennummer des Fahrzeugs, Kennzeichennummer des Fahrzeugs, Datum der Erstzulassung, Name und Adresse des Besitzers.

4. System nach Anspruch 1, **dadurch gekennzeichnet, dass** die Mittel zum Lesen des Speichers der Speichermittel (17) einen Chip-Kartenleser enthalten.

5. System nach Anspruch 1, **dadurch gekennzeichnet, dass** die Mittel (22) zum Erfassen des persönlichen Codes durch den autorisierten Benutzer ein Tastenfeld enthalten.

6. System nach einem der vorangehenden Ansprüche, **dadurch gekennzeichnet, dass** das Spezialgerät (20) Mittel zum Anschluss an eine im Fahrzeug mitgeführte Leiteinheit enthält, so dass eine Leitungsverbindung für den Datenaustausch hergestellt wird.

7. System nach Anspruch 1, **dadurch gekennzeichnet, dass** die Mittel zum Übertragen des Blockiersignals des Schlüssels einen Transponder enthalten.

8. Verfahren zum Versetzen eines Systems nach einen der vorangehenden Ansprüche in den Lemmodus, **dadurch gekennzeichnet, dass** der im Fahrzeug mitgeführten Leiteinheit ein Signal zum Versetzen in den Lemmodus durch das Spezialgerät bei gültigem persönlichen Code und bei Auswahl einer bestimmten Steuerung über die Erfassungsmittel des Spezialgeräts übertragen wird, wobei die Leiteinheit bei Empfang des genannten Signals in den Lemmodus versetzt wird.

9. Verfahren nach Anspruch 8, **dadurch gekennzeichnet, dass** das Signal zum Versetzen in den Lernmodus über eine Leitungsverbindung zwischen Spezialgerät und an Bord des Fahrzeugs mitgeführter Leiteinheit übertragen wird.

## Claims

1. Security system for motor vehicles, comprising at least one key (11) provided with means of transmitting a coded remote-control signal (16) containing a remote-control code for opening the doors at a distance, referred to as a coded remote-control signal, and also provided with means of transmitting a coded signal for unlocking a vehicle immobilisation device containing an immobiliser code, referred to as an immobiliser code signal, the system also comprising an onboard management unit which comprises a non-volatile memory in which the said remote-control and immobiliser codes are saved, **characterised in that** the system also comprises:
- a saving means (17) forming a data medium and comprising a non-volatile memory whose reading is locked by a personal code known only to the user, the said memory containing the remote-control code and the immobiliser code of the vehicle;
- a dedicated apparatus (20) comprising:
- means (22) of entering the personal code by the authorised user,
- means of reading the remote-control code and the immobiliser code in the memory of the said saving means, functioning only in the event of identity between the confidential code locking the reading of the said memory and the personal code entered by the user;
- as well as means (25) of transmitting the coded remote-control signal.

2. System according to Claim 1, **characterised in that** the saving means (17) is a smart card, the known personal code of the user being saved in the chip (18).

3. System according to Claim 2, **characterised in that** the chip memory (18) also contains at least some of the following information: the reference of the mechanical coding of the keys, the serial number of the vehicle, the registration number of the vehicle, the date on which it was first put into circulation, and the name and address of its owner.

4. System according to Claim 1, **characterised in that** the means of reading the memory of the saving means (17) comprises a smart-card reader.

5. System according to Claim 1, **characterised in that** the means (22) of entering the personal code by the authorised user comprise a keypad.

6. System according to any one of the preceding claims, **characterised in that** the dedicated apparatus (20) comprises means of connection to the onboard management unit so as to effect a cabled connection for exchanging data.

7. System according to Claim 1, **characterised in that** the means of transmitting the key immobiliser signal comprise a transponder.

8. Method for putting in learning mode a system according to any one of the preceding claims, **characterised in that** a signal for putting in learning mode is transmitted to the onboard management unit by the dedicated apparatus when a valid personal code and a given command are selected via the entry means of the dedicated apparatus, the management unit being put in learning mode on reception of the said signal.

9. Method according to Claim 8, **characterised in that** the signal for putting in learning mode is transmitted over a cabled link between the dedicated apparatus and the onboard management unit on board the vehicle.
